# EUROPEAN PATENT SPECIFICATION

(11) **EP 1 340 176 B1**
(45) Date of publication and mention of the grant of the patent: **15.06.2005**
(21) Application number: 01986397.6
(22) Date of filing: 28.11.2001
(51) Int. Cl.: G06F 17/60, G06F 17/30

(54) **MOBILE TERMINAL HAVING MULTIPLE PERSONAL INFORMATION MANAGEMENT FUNCTIONALITY**
MOBILFUNKENDGERÄT MIT MEHREREN FUNKTIONALITÄTEN FÜR DIE VERWALTUNG VON PERSONALINFORMATIONEN
TERMINAL MOBILE A FONCTIONNALITES DE GESTION DE RENSEIGNEMENTS PERSONNELS MULTIPLES

(30) Priority: 01.12.2000 US 728310
(43) Date of publication of application: 03.09.2003
(73) Proprietor: Telefonaktiebolaget LM Ericsson (publ), 164 83 Stockholm (SE)
(72) Inventor: NOVAK, Lars, S-237 91 Bjärred (SE); BIRKLER, Jörgen, S-214 22 Malmö (SE)
(74) Representative: O'Connell, David Christopher
(86) International application number: PCT/EP2001/013878
(87) International publication number: WO 2002/044958

(56) References cited:
- WO-A-00/48096
- WO-A-00/62201
- US-A- 5 519 606
- US-A- 6 000 000
- US-A- 6 131 096

## Description

### TECHNICAL FIELD

The present invention relates to personal information managements (PIM) applications, and more particularly, to a system and method for synchronizing multiple versions of a personal information management application with multiple remote servers.

### BACKGROUND OF THE INVENTION

Mobile terminals such as laptop computers, mobile telephones, personal data assistants and pagers have become common tools in modern society. Users of these devices utilize personal information management (PIM) applications such as address books, calendars, or "to do" lists on their mobile terminals. These PIM applications were originally stand alone applications without synchronization to the outside world. As PIM applications further developed, the next generation of applications included the ability to synchronize with a personal computer. This process is referred to as local synchronization.

When using local synchronization, a user has a single version of a PIM application on a personal computer which is synchronized with a mobile terminal version of the PIM application. Since the synchronization is local, the mobile terminal version of the PIM application may only synchronize with a single PC. A need has arisen for a mobile terminal PIM application to be able to synchronize with multiple remote computing devices or servers. This need has arisen because of the ability of a PIM application to remotely synchronize with a number of Internet servers. Users now desire to synchronize a mobile terminal PIM application with several different remote servers. Presently this is not possible.

Document WO-A-00/48096 is concerned with a method of synchronising at least three databases, each containing only one type of data held on three different components, such as a PC, a laptop and a mobile phone. A user may edit the database on any one of the three components and the changes made wil be propagated to the other two databases such that consistency is maintained between all three versions of the database. A calender is given as an example of a database.

### SUMMARY OF THE INVENTION

According to one aspect of the present invention there is provided a method of synchronising a mobile terminal with a plurality of remote servers, comprising the steps of obtaining synchronisation between a first portion of a PIM functionality and a first remote server to display first data from the first remote server; obtaining synchronisation between a second portion of a PIM functionality and a second remote server to display second data from the second remote server; and displaying the first and second data from the first and second remote servers on at least one display associated with the mobile terminal.

According to another aspect of the present invention there is provided a mobile terminal comprising: a personal information management PIM means comprising first and second portions, the first portion of the PIM means being operable to obtain synchronisation between itself and a first remote server in order to obtain first data from that first remote server, and the second portion of the PIM means being operable to obtain synchronisation between itself and a second remote server in order to obtain second data from that second remote server; and at least one display device adapted to display the first and second data from the first and second remote servers.

### BRIEF DESCRIPTION OF THE DRAWINGS

A more complete understanding of the method and apparatus of the present invention may be obtained by reference to the following detailed description when taken in conjunction with the accompanying drawings, wherein:
FIGURE 1 is an illustration of a mobile terminal including the multiple PIM functionality of the present invention communicating with a plurality of remote servers;
FIGURES 2a-2c illustrate the manner in which data may be displayed from multiple remote servers on a display of the mobile terminal;
FIGURE 3 illustrates a unified display of data from a plurality of remote servers on a display of the mobile terminal;
FIGURE 4 illustrates a configurable unified display showing personal and general information;
FIGURE 5 is a flow diagram illustrating the operation of the system illustrated in FIGURE 1; and
FIGURE 6 illustrates downloading of data between a pair of mobile terminals rather than from a remote server.

### DETAILED DESCRIPTION

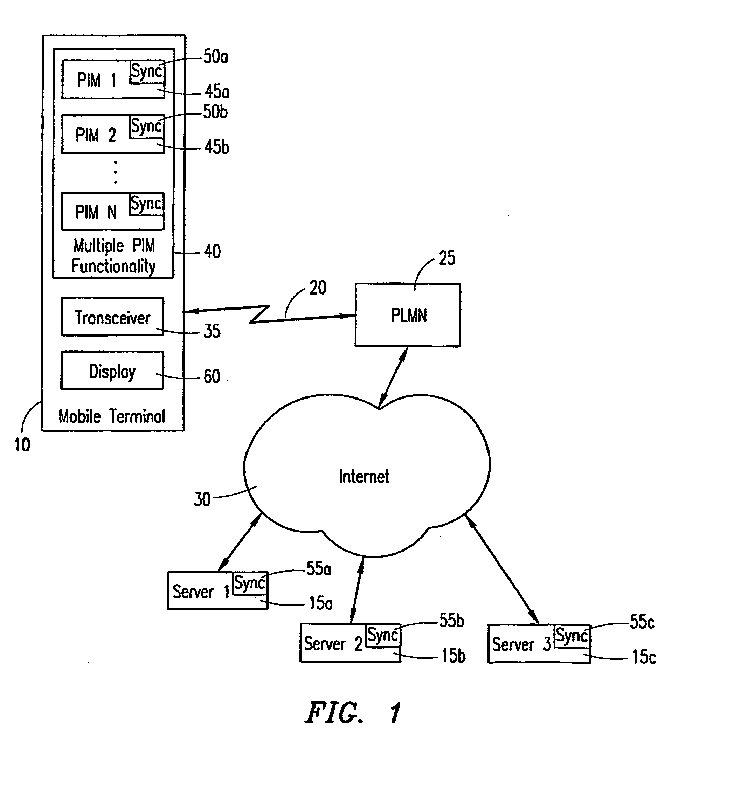

Referring now to FIGURE 1, there is illustrated a mobile terminal 10 which can synchronize with a plurality of remote servers 15. Synchronization may occur using a wireless link 20 between the mobile terminal 10 and a network 25, for example, a PLMN, which provide access to the Internet 30. The wireless link 20 between the mobile terminal 10 and the PLMN 25 is supported by transceiver circuitry 35 within the mobile terminal 10. The mobile terminal 10 generates a synchronization link to the various remote servers 15 using the connection through the PLMN 25 and the Internet 30.

The mobile terminal 10 obtains synchronization with a plurality of remote servers 15 using the multiple personal information management (PIM) functionality 40. The multiple PIM functionality 40 includes a plurality of separate versions of a PIM application 45. Each of these versions of the PIM application 45 has the capability of synchronizing with a separate server 15. Each of the versions of the PIM application 45 includes separate synchronization data 50 enabling synchronization with the synchronization circuitry 55 included within each of the plurality of remote servers 15. The synchronization data 50a of a first version of the PIM application 45a enable this first version of the PIM application 45a to synchronize with the server 15a using synchronization circuitry 55a. Likewise, version 45b may use synchronization data 50b to synchronize with remote server 15b using synchronization circuit 55b. This process may continue with each version of the PIM application 45 synchronizing with a particular server 15.

The synchronization process enables data stored within the remote servers 15 to be downloaded to and displayed at the mobile terminal 10 on display 60. The data may be transferred in one embodiment using the vCalendar format, as described in "vCalendar - The Electronic Calendaring and Scheduling Exchange Format Version 1.0", September 16, 1996,.

The mobile terminal 10 interprets the data in vCalendar format and displays the data in the format of the mobile terminal. If, for example, the multiple PIM functionality 40 within the mobile terminal 10 included versions of a PIM application 45 for displaying a PIM calendar, the versions of the calendar application 45 would each be synchronized with a remote server such as YAHOO, MSN and Go.com. Data (i.e., dates) from each of these servers are downloaded and displayed on the display 60 of the mobile terminal 10. Each of the remote servers 15 include different content. For instance, the Go.com server would provide information about, for example, new movies by Disney, while the MSN server would provide information about Microsoft products. Other remote servers might provide local information about happenings in a user's hometown.

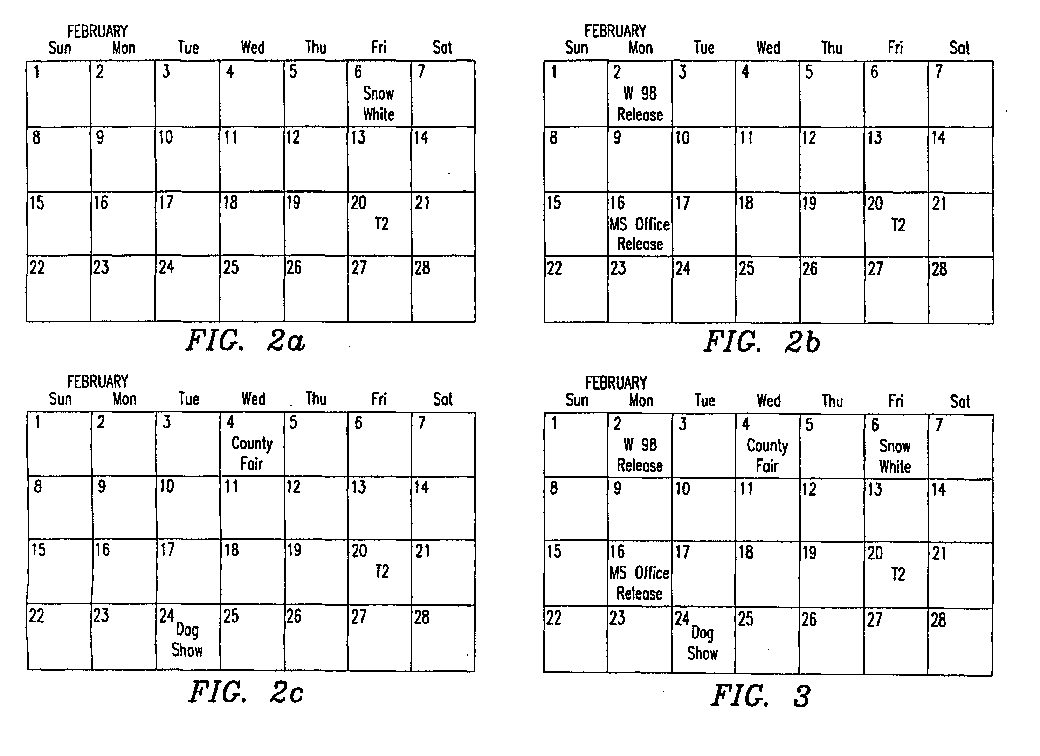

Referring now to FIGURES 2a-2c, there is provided one example of the manner in which the data may be displayed by the multiple PIM functionality 40. In FIGURES 2a-2c, the information from three different servers are displayed separately on three different screens of the mobile terminal 10. Thus, the information in FIGURE 2a could be displayed on the display 60 of the mobile terminal 10 at one time then by clicking or requesting a next screen the information illustrated in FIGURES 2b and 2c would be displayed.

Alternatively, as illustrated in FIGURE 3, the information from each of the remote servers 15 can be combined into a single unified display as illustrated. In this case, the calendar date information from the plurality of servers 15 are combined into a single calendar. Each of the three calendars could also be displayed together rather than displaying the data in a single calendar. A software program within the mobile terminal 10 combines the data into either of the described unified displays. It should be appreciated that while the discussion with respect to FIGURES 1, 2 and 3 have related to a PIM calendar functionality that any number of PIM applications may be utilized in accordance with the present invention.

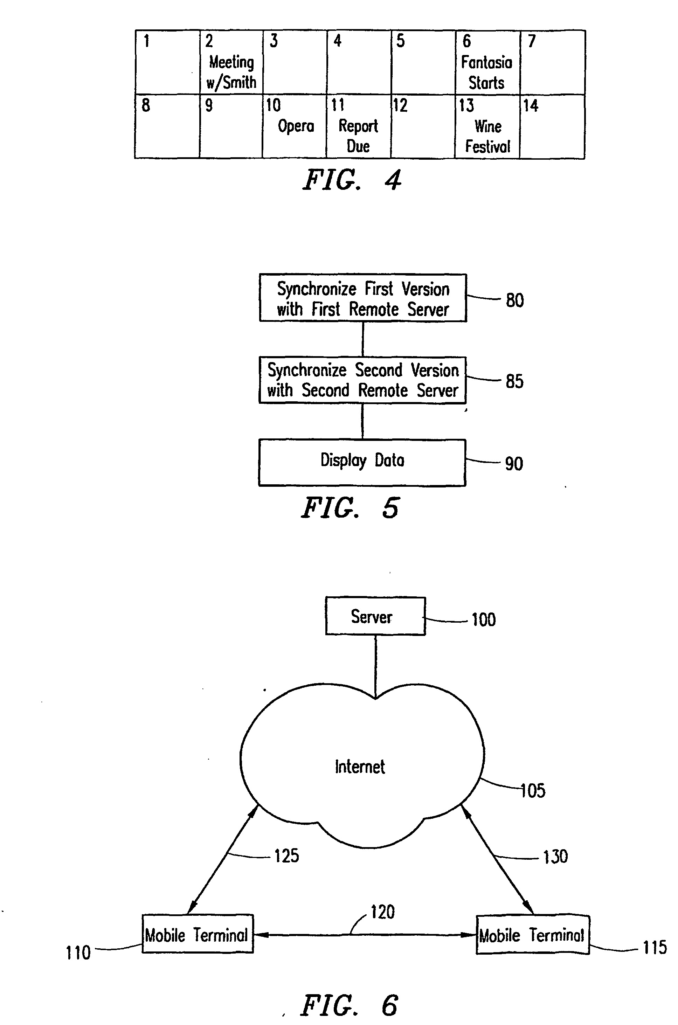

Referring now to FIGURE 4, there is illustrated a use of the present invention wherein a private calendar 100, which may be customized by a user to provide a desired look to the display and desired information on the display. The customization may be performed by a user via a PC interconnected with the mobile terminal 10 or directly on the mobile terminal 10. The information displayed in the portion of the calendar 100 shown in FIGURE 4 is divided into private appointments 105, shown in bold (alternative indications such as highlighting, italicizing or coloring may also be used as an indication), and general appointments 110 which are non-bolded. The private appointments 105 might comprise meetings the user is to attend or other appointments personal to the user of the device containing the multiple PIM functionality 40. The general events 110 comprise information of a general nature of which the user might have an interest, for example, movies that are showing within the area, concert dates, festival dates and the like. Rather than having a private calendar 100 that is updatable by the user, the calendar may also be configured for informative purposes wherein the information is only displayed and is not manipulated or changed by the user.

The multiple PIM functionality 40 may have the calendar 100 set up such that a user's mobile terminal 10 would periodically download particular types of information which they desired to have stored on their calendar 100. For example, if the user were interested in movies, the user's calendar 100 could synchronize with a calendar providing movie information once a week. If the user were interested in concerts, the user's calendar 100 could synchronize once a month with the local symphony's website calendar. The user may predefine the servers with which their calendar 100 synchronizes and downloads.

The PIM functionality 40 may also be configured to provide updates if an event changes. For example, if a concert were canceled that the user had entered into their calendar, they would be provided with a special notification of the cancellation during a next synchronization. Also, if the user had downloaded particular information relating to their favorite television programs and a program were preempted or canceled for any reason, the user would be provided with an update of this change in the TV schedule during a next synchronization.

Referring now to FIGURE 5, there is illustrated a functional block diagram of a method of operation of the system illustrated in FIGURE 1. Initially, a first version of the PIM application 45a within the multiple PIM functionality 40 obtains synchronization at step 80 with a first remote server 15a. After synchronization has been obtained between a first version of the PIM application and a first remote server, a second version of the PIM application 45b obtains synchronization at step 85 with a second remote server 15b. This process may continue for as many PIM modules 45 and servers 15 as are available. Information obtained from the synchronization of the first PIM version 45a and second PIM version 45b are presented at 90 on the display 60 of the mobile terminal 10 in either the separated or unified form as discussed previously with respect to FIGURES 2 and 3.

Referring now to FIGURE 6, there is illustrated an embodiment wherein data relating to, for example, a calendar, may be downloaded directly between a first mobile terminal 110 and a second mobile terminal 115 rather than from a remote server 100. In the example illustrated in FIGURE 6, the mobile terminal 115 accesses data within mobile terminal 110 either directly via a communications link 120 using, for example, a PLMN telecommunications system, Bluetooth connection, infrared connection or any other wireline or wireless technology, or alternatively, may access the mobile terminal 110 via the Internet 105 using communications links 130 and 125.

Upon accessing the mobile terminal 110, the mobile terminal 115 may download data, for example, a calendar to provide access to all of the calendar data from mobile terminal 110. This information may then be stored within a calendar within the mobile terminal 115. Data from the remote server 100 may also be downloaded to either of the mobile terminals as described previously. Alternatively, the mobile terminal 115 may merely add data to the calendar within mobile terminal 110. This would involve uploading data from the mobile terminal 115. Provision of access by the mobile terminal 115 to the calendar data within mobile terminal 110 would be via some type of secure procedure which only enables access to the calendar data within the mobile terminal 110 by approved users.

The previous description is of a preferred embodiment for implementing the invention, and the scope of the invention should not necessarily be limited by this description. The scope of the present invention is instead defined by the following claims.

## Claims

1. A method of synchronising a mobile terminal (10,110) with a plurality of remote servers (15a,15b,15c), comprising the steps of:
obtaining synchronisation (80) between a first portion of a personal information management PIM functionality (45a) and a first remote server (15a) to display first data from the first remote server (15a);
obtaining synchronisation (85) between a second portion of a PIM functionality (45b) and a second remote server (15b) to display second data from the second remote server; and
displaying the first and/or second data from the first and second remote servers on at least one display (60) associated with the mobile terminal.

2. The method of synchronising a mobile terminal with a plurality of remote servers as claimed in claim 1, wherein the step of displaying comprises the step of selectively displaying the first data or the second data responsive to user input.

3. The method of synchronising a mobile terminal with a plurality of remote servers as claimed in claim 1, wherein the step of displaying comprises the step of displaying the first data and the second data in a unified display.

4. The method of synchronising a mobile terminal with a plurality of remote servers as claimed in claim 1, wherein the step of displaying further comprises the step of displaying the data in a calendar.

5. The method of synchronising a mobile terminal with a plurality of remote servers as claimed in claim 4, wherein the step of displaying the data further comprises displaying the data in a bold format and a non-bolded format depending on the type of the data.

6. The method of synchronising a mobile terminal with a plurality of remote servers as claimed in claim 4, wherein the step of displaying the data further comprises displaying the data in a bold format and a non-bolded format depending on the relevance of the data.

7. The method of synchronising a mobile terminal with a plurality of remote servers as claimed in claim 4, wherein the step of displaying comprises the step of displaying the data in the calendar in accordance with a selectable configuration of the calendar.

8. The method of synchronising a mobile terminal with a plurality of remote servers as claimed in claim 1, wherein the step of displaying further comprises displaying different data in different formats.

9. A mobile terminal (10,110) comprising:
a personal information management PIM means comprising first and second portions (45a,45b), the first portion of the PIM means being operable to obtain synchronisation between itself and a first remote server (15a) in order to obtain first data from that first remote server, and the second portion of the PIM means being operable to obtain synchronisation between itself and a second remote server (15b) in order to obtain second data from that second remote server; and
at least one display device (60) adapted to display the first and/or second data from the first and second remote servers.

10. A mobile terminal as claimed in claim 9, further comprising a user input unit adapted to respond to user input, the or each display device being operable to display the first data or the second data according to the user input.

11. A mobile terminal as claimed in claim 9, wherein the or each display device is adapted to display the first data and the second data in a unified display.

12. A mobile terminal as claimed in claim 9 wherein the or each display device is adapted to display the data in a calendar.

13. A mobile terminal as claimed in claim 12, wherein the or each display device is adapted to display the data in a bold format and a non-bolded format depending on the type of the data.

14. A mobile terminal as claimed in claim 12, wherein the or each display device is adapted to display the data in a bold format and a non-bolded format depending on the relevance of the data.

15. A mobile terminal as claimed in claim 12, wherein the or each display device is adapted to display the data in the calendar in accordance with a selectable configuration of the calendar.

16. A mobile terminal as claimed in claim 9, wherein the or each display device is adapted to display different data in different formats.

17. A mobile terminal as claimed in claim 9, wherein the first and second portions (45a,45b) of the PIM means form part of a multiple PIM functionality module (40).

18. A mobile terminal as claimed in claim 17, wherein the multiple PIM functionality module (40) includes a plurality of versions of a PIM application, and each version of the PIM application is adapted to synchronise with one of multiple remote servers (15a,15b,15c).

19. A mobile terminal as claimed in claim 18, wherein the multiple PIM functionality module provides for a separate display format of data from each of the multiple remote servers.

20. A mobile terminal as claimed in claim 18, further comprising transceiver circuitry (35) adapted to communicate with the multiple remote servers through a wireless network (20,25).

21. A mobile terminal as claimed in claim 18, wherein each of the plurality of versions of the PIM application includes separate synchronisation data (50a,50b) to enable synchronisation with the multiple remote servers (15a,15b,15c).

22. A mobile terminal as claimed in claim 18, wherein the multiple PIM functionality module (40) is adapted to provide a separate display format for data from each of the multiple remote servers (15a,15b,15c).

23. A mobile terminal as claimed in claim 18, wherein the multiple PIM functionality module (40) is adapted to provide for a unified display of data from each of the multiple remote servers (15a,15b,15c).

24. A mobile terminal as claimed in claim 18, wherein the multiple PIM functionality module (40) is adapted to enable the mobile terminal (110) to synchronise with a second mobile terminal (115).

## Patentansprüche

1. Ein Verfahren für das Synchronisieren eines mobilen Endgerätes (10, 110) mit einer Vielzahl von fernen Servern (15a, 15b, 15c), umfassend diese Schritte:
- Erhalten von Synchronisation (80) zwischen einem ersten Bereich einer Funktionalität für persönliche Informations-Verwaltung PIM (personal information management) (45a) und einem ersten fernen Server (15a) um erste Daten von dem ersten fernen Server (15a) anzuzeigen;
- Erhalten von Synchronisation (85) zwischen einem zweiten Bereich einer Funktionalität für persönliche Informations-Verwaltung PIM (45b) und einem zweiten fernen Server (15b) um zweite Daten von dem zweiten fernen Server (15b) anzuzeigen;
- Anzeigen der ersten und/oder zweiten Daten von dem ersten und zweiten fernen Server auf zumindest einem mit dem mobilen Endgerät verbundenen Display (60).

2. Das Verfahren für das Synchronisieren eines mobilen Endgerätes mit einer Vielzahl von fernen Servern nach Anspruch 1, in welchem der Schritt des Anzeigens den Schritt des selektiven Anzeigens der ersten Daten oder der zweiten Daten in Reaktion auf Benutzereingabe umfasst.

3. Das Verfahren für das Synchronisieren eines mobilen Endgerätes mit einer Vielzahl von fernen Servern nach Anspruch 1, in welchem der Schritt des Anzeigens den Schritt des Anzeigens der ersten Daten und der zweiten Daten in einem vereinheitlichten Display umfasst.

4. Das Verfahren für das Synchronisieren eines mobilen Endgerätes mit einer Vielzahl von fernen Servern nach Anspruch 1, in welchem der Schritt des Anzeigens außerdem den Schritt des Anzeigens der Daten in einem Kalender umfasst.

5. Das Verfahren für das Synchronisieren eines mobilen Endgerätes mit einer Vielzahl von fernen Servern nach Anspruch 4, in welchem der Schritt des Anzeigens der Daten außerdem den Schritt des Anzeigens der Daten in fettem Format und nicht fettem Format, abhängig von der Art der Daten, umfasst.

6. Das Verfahren für das Synchronisieren eines mobilen Endgerätes mit einer Vielzahl von fernen Servern nach Anspruch 4, in welchem der Schritt des Anzeigens der Daten außerdem den Schritt des Anzeigens der Daten in fettem Format und nicht fettem Format, abhängig von der Relevanz der Daten, umfasst.

7. Das Verfahren für das Synchronisieren eines mobilen Endgerätes mit einer Vielzahl von fernen Servern nach Anspruch 4, in welchem der Schritt des Anzeigens den Schritt des Anzeigens in dem Kalender in Übereinstimmung mit einer wählbaren Konfiguration des Kalenders umfasst.

8. Das Verfahren für das Synchronisieren eines mobilen Endgerätes mit einer Vielzahl von fernen Servern nach Anspruch 1, in welchem der Schritt des Anzeigens außerdem den Schritt des Anzeigens unterschiedlicher Daten in unterschiedlichen Formaten umfasst.

9. Ein mobiles Endgerät (10, 110) enthaltend:
- ein Mittel für persönliche Informations-Verwaltung, umfassend erste und zweite Bereiche (45a, 45b), wobei der erste Bereich des PIM-Mittels die Funktion aufweist, Synchronisation zwischen sich selbst und einem ersten fernen Server (15a) zu erhalten, damit erste Daten von diesem ersten Server erhalten werden, und der zweite Bereich des PIM-Mittels die Funktion aufweist, Synchronisation zwischen sich selbst und einem zweiten fernen Server (15b) zu erhalten, damit zweite Daten von diesem zweiten fernen Server erhalten werden; und
zumindest eine Anzeige-Vorrichtung (60), eingerichtet um die ersten und/oder zweiten Daten von dem ersten und zweiten fernen Server darzustellen.

10. Ein mobiles Endgerät nach Anspruch 9, außerdem enthaltend eine Einheit für Benutzer-Eingabe, eingerichtet um auf Benutzer-Eingabe zu reagieren, wobei die oder jede Anzeige-Vorrichtung die Funktion aufweist, die ersten Daten oder die zweiten Daten entsprechend der Benutzer-Eingabe darzustellen.

11. Ein mobiles Endgerät nach Anspruch 9, in welchem die oder jede Anzeige-Vorrichtung eingerichtet ist um die ersten und die zweiten Daten in einem vereinheitlichten Display darzustellen.

12. Ein mobiles Endgerät nach Anspruch 9, in welchem die oder jede Anzeige-Vorrichtung eingerichtet ist um die Daten in einem Kalender darzustellen.

13. Ein mobiles Endgerät nach Anspruch 12, in welchem die oder jede Anzeige-Vorrichtung eingerichtet ist um die Daten in fettem Format und nicht fettem Format, abhängig von der Art der Daten darzustellen.

14. Ein mobiles Endgerät nach Anspruch 12, in welchem die oder jede Anzeige-Vorrichtung eingerichtet ist um die Daten in fettem Format und nicht fettem Format, abhängig von der Relevanz der Daten darzustellen.

15. Ein mobiles Endgerät nach Anspruch 12, in welchem die oder jede Anzeige-Vorrichtung eingerichtet ist um die Daten in dem Kalender in Übereinstimmung mit einer wählbaren Konfiguration des Kalenders darzustellen.

16. Ein mobiles Endgerät nach Anspruch 9, in welchem die oder jede Anzeige-Vorrichtung eingerichtet ist um unterschiedliche Daten in unterschiedlichen Formaten darzustellen.

17. Ein mobiles Endgerät nach Anspruch 9, in welchem die ersten und zweiten Bereiche (45a, 45b) des PIM-Mittels einen Bereich eines Moduls für vielfache PIM-Funktionalität (40) bilden.

18. Ein mobiles Endgerät nach Anspruch 17, in welchem der Modul für vielfache PIM-Funktionalität (40) eine Vielfalt von Versionen einer PIM-Anwendung enthält, und jede Version der PIM-Anwendung dafür eingerichtet ist, sich mit einem der vielfachen fernen Server (15a, 15b, 15c) zu synchronisieren.

19. Ein mobiles Endgerät nach Anspruch 18, in welchem der Modul für vielfache PIM-Funktionalität ein gesondertes Anzeige-Format für die Daten von jedem der vielfachen fernen Server bereitstellt.

20. Ein mobiles Endgerät nach Anspruch 18, außerdem enthaltend Transceiver-Schaltungen (35), eingerichtet um mit den vielfachen fernen Servern über ein drahtloses Netzwerk (20, 25) zu kommunizieren.

21. Ein mobiles Endgerät nach Anspruch 18, in welchem jede der Vielzahl von Versionen der PIM-Anwendung gesonderte Synchronisations-Daten (50a, 50b) enthalten, um die Synchronisation mit den vielfachen fernen Servern (15a, 15b, 15c) zu ermöglichen.

22. Ein mobiles Endgerät nach Anspruch 18, in welchem der Modul für vielfache PIM-Funktionalität (40) eingerichtet ist um ein gesondertes Anzeige-Format für Daten von jedem der vielfachen fernen Server bereitzustellen.

23. Ein mobiles Endgerät nach Anspruch 18, in welchem der Modul für vielfache PIM-Funktionalität (40) eingerichtet ist um eine vereinheitlichte Darstellung von Daten von den vielfachen fernen Servern (15a, 15b, 15c) bereitzustellen.

24. Ein mobiles Endgerät nach Anspruch 18, in welchem der Modul für vielfache PIM-Funktionalität (40) eingerichtet ist um das mobile Endgerät (110) zu befähigen, sich mit einem zweiten mobilen Endgerät (115) zu synchronisieren.

## Revendications

1. Procédé de synchronisation d'un terminal mobile (10, 110) avec une pluralité de serveurs éloignés (15a, 15b, 15c), comprenant les étapes dans lesquelles :
on obtient une synchronisation (80) entre une première partie d'une fonctionnalité de gestion d'information personnelle PIM (45a) et un premier serveur éloigné (15a) pour afficher des premières données provenant du premier serveur éloigné (15a) ;
on obtient une synchronisation (85) entre une seconde partie d'une fonctionnalité PIM (45b) et un second serveur éloigné (15b) pour afficher des secondes données provenant du second serveur éloigné ; et
on affiche les premières et/ou secondes données provenant des premier et second serveurs éloignés sur au moins un afficheur (60) associé au terminal mobile.

2. Procédé de synchronisation d'un terminal mobile avec une pluralité de serveurs éloignés selon la revendication 1, dans lequel l'étape d'affichage comprend l'étape consistant à afficher sélectivement les premières données ou les secondes données en réponse à une entrée d'un utilisateur.

3. Procédé de synchronisation d'un terminal mobile avec une pluralité de serveurs éloignés selon la revendication 1, dans lequel l'étape d'affichage comprend l'étape consistant à afficher les premières données et les secondes données dans un afficheur unifié.

4. Procédé de synchronisation d'un terminal mobile avec une pluralité de serveurs éloignés selon la revendication 1, dans lequel l'étape d'affichage comprend en outre l'étape consistant à afficher les données dans un calendrier.

5. Procédé de synchronisation d'un terminal mobile avec une pluralité de serveurs éloignés selon la revendication 4, dans lequel l'étape d'affichage des données comprend en outre l'affichage des données en un format gras et en un format non gras suivant le type des données.

6. Procédé de synchronisation d'un terminal mobile avec une pluralité de serveurs éloignés selon la revendication 4, dans lequel l'étape d'affichage des données comprend en outre l'affichage des données en un format gras et en un format non gras suivant la pertinence des données.

7. Procédé de synchronisation d'un terminal mobile avec une pluralité de serveurs éloignés selon la revendication 4, dans lequel l'étape d'affichage comprend l'étape consistant à afficher les données dans le calendrier en fonction d'une configuration du calendrier pouvant être sélectionnée.

8. Procédé de synchronisation d'un terminal mobile avec une pluralité de serveurs éloignés selon la revendication 1, dans lequel l'étape d'affichage comprend en outre l'affichage de différentes données en différents formats.

9. Terminal mobile (10, 110) comportant :
un moyen de gestion d'information personnelle PIM comportant des première et seconde parties (45a, 45b), la première partie du moyen PIM pouvant être mise en oeuvre pour obtenir une synchronisation entre elle-même et un premier serveur éloigné (15a) afin d'obtenir des premières données provenant de ce premier serveur éloigné, et la seconde partie du moyen PIM pouvant être mise en oeuvre pour obtenir une synchronisation entre elle-même et un second serveur éloigné (15b) afin d'obtenir des secondes données provenant de ce second serveur éloigné ; et
au moins un dispositif d'affichage (60) conçu pour afficher les premières et/ou secondes données provenant des premier et second serveurs éloignés.

10. Terminal mobile selon la revendication 9, comportant en outre une unité d'entrée d'utilisateur conçue pour réagir à une entrée d'un utilisateur, le ou chaque dispositif d'affichage pouvant être mis en oeuvre pour afficher les premières données ou les secondes données suivant l'entrée de l'utilisateur.

11. Terminal mobile selon la revendication 9, dans lequel le ou chaque dispositif d'affichage est conçu pour afficher les premières données et les secondes données en un affichage unifié.

12. Terminal mobile selon la revendication 9, dans lequel le ou chaque dispositif d'affichage est conçu pour afficher les données en un calendrier.

13. Terminal mobile selon la revendication 12, dans lequel le ou chaque dispositif d'affichage est conçu pour afficher les données en un format gras et en un format non gras suivant le type des données.

14. Terminal mobile selon la revendication 12, dans lequel le ou chaque dispositif d'affichage est conçu pour afficher les données en un format gras et en un format non gras suivant la pertinence des données.

15. Terminal mobile selon la revendication 12, dans lequel le ou chaque dispositif d'affichage est conçu pour afficher les données dans le calendrier conformément à une configuration du calendrier pouvant être sélectionnée.

16. Terminal mobile selon la revendication 9, dans lequel le ou chaque dispositif d'affichage est conçu pour afficher différentes données en différents formats.

17. Terminal mobile selon la revendication 9, dans lequel les première et seconde parties (45a, 45b) du moyen PIM forment une partie d'un module à fonctionnalité PIM multiple (40).

18. Terminal mobile selon la revendication 17, dans lequel le module à fonctionnalité PIM multiple (40) comprend une pluralité de versions d'une application PIM, et chaque version de l'application PIM est conçue pour une synchronisation avec l'un de serveurs éloignés multiples (15a, 15b, 15c).

19. Terminal mobile selon la revendication 18, dans lequel le module à fonctionnalité PIM multiple fournit un format d'affichage séparé de données à partir de chacun des serveurs éloignés multiples.

20. Terminal mobile selon la revendication 18, comportant en outre un circuit de moteur-récepteur (35) conçu pour communiquer avec les serveurs éloignés multiples par un réseau sans fil (20, 25).

21. Terminal mobile selon la revendication 18, dans lequel chacune de la pluralité de versions de l'application PIM comprend des données de synchronisation séparées (50a, 50b) pour valider une synchronisation avec les serveurs éloignés multiples (15a, 15b, 15c).

22. Terminal mobile selon la revendication 18, dans lequel le module (40) à fonctionnalité PIM multiple est conçu pour établir un format d'affichage séparé pour des données provenant de chacun des serveurs éloignés multiples (15a, 15b, 15c).

23. Terminal mobile selon la revendication 18, dans lequel le module (40) à fonctionnalité PIM multiple est conçu pour établir un affichage unifié de données à partir de chacun des serveurs éloignés multiples (15a, 15b, 15c).

24. Terminal mobile selon la revendication 18, dans lequel le module (40) à fonctionnalité PIM multiple est conçu pour autoriser le terminal mobile (110) à se synchroniser avec un second terminal mobile (115).
